Europäisches Patentamt

European Patent Office

Office européen des brevets

(11) Publication number: **0 157 454**
A1

# EUROPEAN PATENT APPLICATION

(21) Application number: **85200435.7**

(22) Date of filing: **20.03.85**

(51) Int. Cl.⁴: **A 23 G 1/10**

(30) Priority: **02.04.84 NL 8401037**

(43) Date of publication of application: **09.10.85**
**Bulletin 85/41**

(84) Designated Contracting States: **AT BE CH DE FR GB IT LI LU NL SE**

(71) Applicant: **Wiener Holding Maatschappij Amsterdam B.V., Oostenburgervoorstraat 1-3, NL-1018 MN Amsterdam (NL)**

(72) Inventor: **Tadema, Jan Cornelis, No. 13, Grootiand, NL-1861 JA Bergen (NL)**

(74) Representative: **Hoijtink, Reinoud et al, OCTROOIBUREAU ARNOLD & SIEDSMA Sweeiinckplein 1, NL-2517 GK The Hague (NL)**

(54) Device for preparing chocolate.

(57) A device for grinding and mixing of a mass, for example or preparing chocolate, in which the means for grinding and mixing are arranged in one vessel and wherein the vessel is provided with means for circulating the chocolate means for example a communication duct between the upper part and the lower part of the vessel. In the duct a pump is included. By means of the duct the mass is circulated and altenately subjected to grinding and to mixing.

ACTORUM AG

-1-

The invention relates to a device for grinding and mixing of a mass containing various components, for example, for preparing chocolate.

Such a device is known, for example, from Dutch patent specification 163.708. In this known device the vessel with the grinding means and the mixing device are arranged in a closed circuit. By means of a pump in the connection ducts between the vessels the chocolate mass is constantly circulated during the preparation. In contrast to what had been done before, grinding is continued until a given fitness, after which mixing is performed, but the two works are mixedly performed. This provides a considerable reduction of the time of preparation. Although the system described above gives good satisfaction, there is a need for systems having, on the one hand, a lower capacity and, on the other hand, require less space for operation.

The invention provides a solution for this problem in that the means for grinding and mixing are arranged in a single vessel and in that the vessel is provided with means for circulating the chocolate mass.

It is noted that arranging the means for grinding and mixing in one vessel was not found to ensure the desired result. It was found that in the grinding part solid components were refined to an extent such that a high increase in viscosity occurred so that the flow to the mixing part was insufficeint or lacked fully. In the vessel a portion of already very finely ground mass was formed on the one hand, whereas in another part of the vessel a portion of the chocolate mass had hardly been ground.

The invention is based on the recognition of the fact that despite the whirling movement due to grinding and mixing in the mass insufficient displacement of the chocolate mass could take place because the viscosity of the chocolate mass in the grinding part strongly increased within a short time. Only after the disposition of means for circulating the mass, a satisfactory result appeared to be obtainable.

The means for circulating the mass preferably comprise an upper part and a lower part of the vessel, whilst the duct includes a pump. The duct preferably extends outside the vessel.

In a preferred embodiment the means for mixing can be arranged in the upper part and the means for grinding can be arranged in the lower part of the vessel. The duct can be provided with an outlet tap for the chocolate mass.

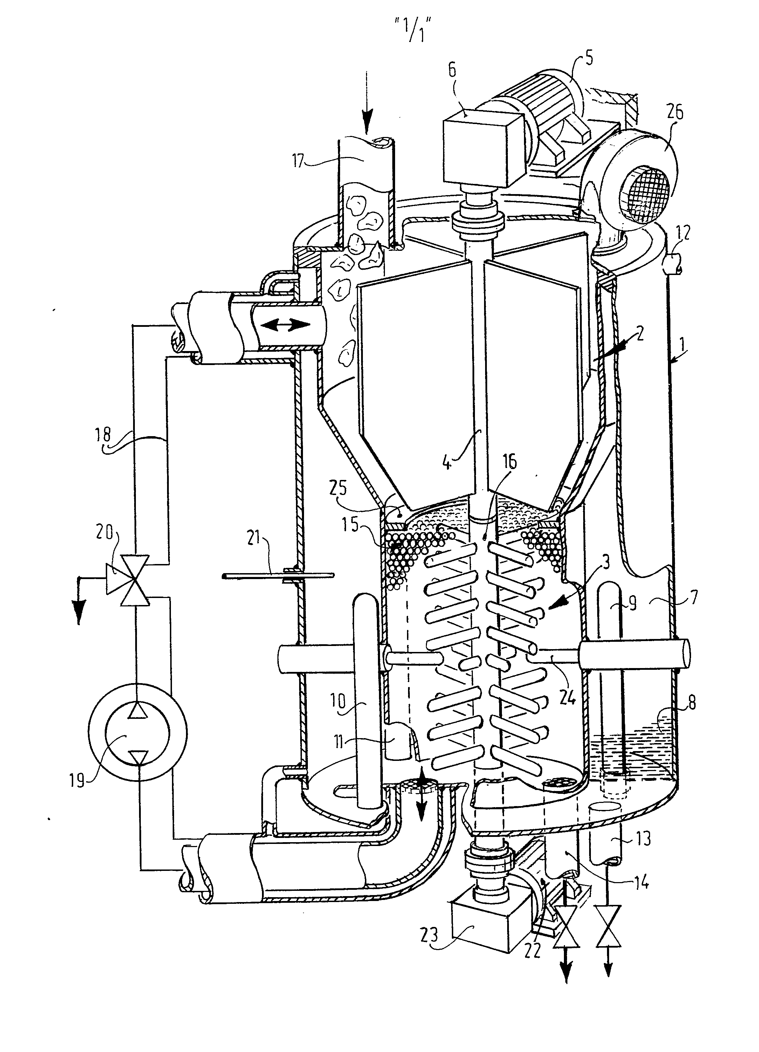

The invention will be described more fully with reference to the accompanying figure. In the vessel the upper part comprises a stirring device 2 and the lower part comprises a so-called ball mill 3. The agitators of the ball mill 3 and of the mixing device 2 are connected each with a rotary shaft 4 and 16 respectively with each its own driving. The rotary shaft 4 is driven by an electric motor 5 through a gear wheel transmission 6; the rotary shaft 16 is driven by a motor 22 and a gear wheel transmission 23. The vessel 1 had a double wall and contains a cooling fluid in the intermediate space 7. The intermediate space furthermore includes three heating elements 9,10 and 11. By means of the last-mentioned means the mass can be heated and cooled respectively. The fluid required to this end is supplied through an inlet opening 12 and can be conducted away through an outlet opening 13.

With the vessel is furthermore connected an outlet opening 14 for the balls 15 of the grinding means. The chocolate mass to be worked is supplied through the inlet 17 to the upper part of the vessel. The upper part of the vessel communicates through the duct 18 with the lower part of the vessel. The duct includes a pump 19. The duct furthermore has an outlet tap 20. The temperature of the chocolate mass can be measured by means of a thermometer 24. Finally the intermediate sapce 7 includes a thermometer 21. Between the grinding and the mixing parts is furthermore arranged an arresting ring 25 in order to prevent balls 15 from getting into the mixing part.

During operation, after filling with the mass to be worked through the inlet opening 17 the rotary shafts 4 and 16 are constantly rotated, whilst the mass is circulated by the pump 19. Like in the prior art of Dutch specification 163.708 the mass is thus alternately subjected to a grinding and a mixing process.

In order to improve the effect, if necessary, on the upper part of the vessel 1 a supercharger 26 may be provided.

-1-

CLAIMS

1. A device for grinding and mixing a mass comprising various components, for example, for preparing chocolate, characterized in that means for grinding and mixing are arranged in one vessel and in that the vessel is provided with means for circulating the chocolate means.

2. A device as claimed in claim 1, characterized in that the means for circulating the mass comprise a communication duct between an upper part and a lower part of the vessel, said duct including a pump.

3. A device as claimed in claim 2, characterized in that the duct extends outside the vessel.

4. A device as claimed in claim 1 to 3, characterized in that 'the means for mixing are arranged in the upper part and the means for grinding are arranged in the lower part.

5. A device as claimed in claim 3, characterized in that the duct is provided with a tap for delivering the chocolate mass.

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 060 792  (MIKROVAERK) <br> * Figures 1,2; pages 1,2 * | 1-4 | A 23 G    1/10 |
| X,Y | BE-A-  551 051  (J.A. GODDARD et al.) <br> * Figures 1,6,5,7 * | 1-5 | |
| X | FR-A-  969 933  (NATIONAL MOLINOR) <br> * Figures 4,5 * | 1,2,4 | |
| Y | DE-C-  648 843  (A. BECK) <br> * Figure 1 * | 1-5 | |
| Y | US-A-3 663 231  (A.G. TOURELL) <br> * Figure 1; claims 1-18; column 5, line 53 - column 6, line 75 * | 1-5 | |
| X | DE-A-3 202 929  (J. BAUERMEISTER et al.) <br> * Figure 1 * | 1-3,5 | TECHNICAL FIELDS SEARCHED (Int. Cl.4) <br><br> A 23 G |
| A | US-A-3 634 106  (CADBURY BROTHERS) | | |
| A | US-A-4 224 354  (A. SZEGVARI) | | |
| | -/- | | |

The present search report has been drawn up for all claims

| Place of search | Date of completion of the search | Examiner |
|---|---|---|
| THE HAGUE | 28-05-1985 | GUYON R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent
Office

**EUROPEAN SEARCH REPORT**

0157454
Application number

EP 85 20 0435

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | LU-A- 80 416 (VEB SCHOKOLADEN-VERARBEITUNGSMASCHINEN) | | |
| A | DE-B-1 226 406 (DRAISWERKE) | | |
| A | DE-B-1 272 698 (DRAISWERKE) | | |
| A | FR-A-1 033 248 (J. VOEGELE) | | |
| A | FR-A- 993 106 (SEM) | | |
| D,A | NL-C- 163 708 (WIENER B.C.) | | TECHNICAL FIELDS SEARCHED (Int. Cl.4) |

The present search report has been drawn up for all claims

| Place of search THE HAGUE | Date of completion of the search 28-05-1985 | Examiner GUYON R.H. |
|---|---|---|